Europäisches Patentamt

European Patent Office

Office européen des brevets

(19)

(11) Publication number: **0 269 918**
**A2**

(12) # EUROPEAN PATENT APPLICATION

(21) Application number: **87116554.4**

(22) Date of filing: **10.11.87**

(51) Int. Cl.⁴: **B23B 27/16**

(30) Priority: **01.12.86 US 936275**

(43) Date of publication of application:
**08.06.88 Bulletin 88/23**

(84) Designated Contracting States:
**AT BE CH DE FR GB IT LI SE**

(71) Applicant: **GENERAL ELECTRIC COMPANY**
**1 River Road**
**Schenectady New York 12305(US)**

(72) Inventor: **Hague, Sazzadul**
**3290 Wolverine**
**Troy Michigan 48084(US)**
Inventor: **Floyd, Thomas O.**
**43249 Hartwick**
**Sterling Heights Michigan 48078(US)**
Inventor: **Savas, Nick**
**1746 Southfield**
**Dearborn Michigan 48124(US)**

(74) Representative: **Schüler, Horst, Dr. European**
**Patent Attorney et al**
**Kaiserstrasse 41**
**D-6000 Frankfurt/Main 1(DE)**

(54) Cutting tool employing a double pin retention assembly.

(57) Disclosed is a double pin retention assembly for securely locking a cutting insert in a pocket of a tool holder. Means are provided for anchoring a primary retention pin within the cutter body and a secondary retention pin within the primary retention pin so that a locking force is provided along the entire length of the primary retention pin and a locking force is provided by both pins against the cutting insert in the direction of the cutter body to thereby prevent movement in machining operations especially for on-edge tool holders.

**FIG. 1**

## CUTTING TOOL EMPLOYING A DOUBLE PIN RETENTION ASSEMBLY

### FIELD OF THE INVENTION

The present invention is directed to a cutting tool of the type used in the machining of metal in which a disposable insert hard cutting tool is releasably held in a tool holder and specifically to a double retention pin-type retaining means for retaining the disposable cutting insert in a pocket of the cutting tool. The cutting tool insert remains fixed in the tool pocket when subjected to the stresses of machining operations and is especially suited for on-edge cutting tool inserts.

### BACKGROUND OF THE INVENTION

Cutting tools having a pin-type retaining means are known in the art. For example, Kelm, U.S. Patent Nos. 3,341,920 and 3,341,923 disclose pin-type retaining means insertable into an axial hole of the cutting tool, wherein when the pin is driven axially into the hole, the pin forces the cutting insert against the supporting shoulder of the tool body to thereby lock the cutting insert in place.

As the threads of the pin engage the corresponding grooves of the tool body, contact is made between the central tapered portion of the pin and the corresponding tapered portion of the axial hole in the tool body. As a result, the pin is forced laterally toward the shoulder of the recess against which the cutting insert rests providing a firm lock of the cutting insert against the shoulder. More specifically as shown in Figures 2 and 3 of U.S. Patent No. 3,341,920, the portion of the axial hole adjacent the base of the recess is tapered inwardly from the base of the recess to form a conical portion having a central axis identified by the line A-A. The remaining threaded portion of the axial hole in the recess of the tool body is cylindrical and has a central axis B-B offset from the axis A-A of the conical portion of the hole. The axis A-A is offset from the axis B-B in the direction toward the supporting shoulder of the shank. As a result, a significant force is applied against the cutting insert by the pin to thereby lock the same against the supporting shoulder. U.S. Patent Nos. 3,341,920 and 3,941,923 are incorporated herein by reference.

Such retention pins also have an axial hole in the bottom threaded portion of the pin extending upward toward the tapered section of the pin. The axial hole has grooves which mate with a drive means such as a hex wrench to provide a greater locking force at the bottom of the pin.

These prior art devices are particularly suited for so-called lay-down type cutting inserts. However, such devices do not satisfactorily inhibit movement during the cutting operation when on-edge cutting inserts are employed. This is because the retention force generated by the pin is directed primarily at the top and bottom of the pin and not along the central portion thereof. As a result, the cutting forces generated in the vicinity of the central portion of the cutting tool can cause movement resulting in premature tool failure.

To overcome the problems with on-edge type of cutting inserts, tool clamps have been used which apply a clamping force against the top surface of the cutting insert substantially perpendicular to the cutting edge to maintain the same in the locked position. The clamp is used in conjunction with pin-type retaining means described previously to provide a greater locking force.

The use of a clamp in conjunction with pin-type retaining means has three primary disadvantages. First, the clamp is bulky and can prevent or inhibit access to certain work pieces. Therefore, clamp type retaining means cannot be used in some machining operations.

Second, additional time and effort must be expended to lock and unlock the clamp and the cutting insert. A third disadvantage is that the clamp and those tools which are used to lock and unlock the clamp add significantly to the cost of the cutting tool. These disadvantages have made the use of clamps with pin-type retaining means of limited value for on-edge cutting tools.

The present invention overcomes the disadvantages of the aforementioned prior pin-type retaining means by employing a double pin retention assembly which provides a locking force substantial along the entire pin including the central portion thereof. As a result, the double pin assembly locks the cutting insert along substantially the entire length of the pin to provide a secure fit. Furthermore, the double pin retention assembly of the present invention eliminates the need for cumbersome and expensive tool clamps.

It is therefore an object of the present invention to provide a cutting tool having a double pin-type retaining means which provides a locking force substantially along the entire length of the pin to more securely retain the cutting insert in the pocket of the cutting tool.

It is a further object of the invention to provide a cutting tool having a double pin-type retaining means especially suited for locking an on-edge cutting insert so that movement during cutting operations is substantially eliminated and tool failure is significantly reduced.

## SUMMARY OF THE INVENTION

In general, the cutting tool of the present invention includes a cutter body comprising a base and at least one supporting shoulder and a cutting insert which is mounted on the base.

The base has an axial hole therein extending the length of the cutter body for receiving a primary retention pin. The axis of the axial hole adjacent the base is offset from the axis of the remaining portion of the axial hole. The primary retention pin has an axial hole for receiving a secondary retention pin. The secondary retention pin is insertable through the cutting insert and into reversable locking engagement within the axial hole of the primary retention pin. Because of the offset arrangement of the axis of the axial hole in the cutter body both the primary and secondary retention pins exert a force in the direction of the shoulder of the cutting tool to thereby lock the cutting insert in place. Furthermore, the secondary retention pin exerts a downward force along substantially the entire length of the primary retention pin thereby providing an additional locking force for the cutting insert unavailable in prior devices.

## DETAILED DESCRIPTION OF THE INVENTION

The present cutting tool includes a disposable cutting insert having an axial hole therein and a cutter body having a recess in the upper surface thereof to provide a base and at least one supporting shoulder for the cutting insert.

The cutter body has an axial hole therethrough extending upward and opening into the recess and which is alignable with the axial hole of the cutting insert. The axial hole of the cutter body adjacent the base has an axis which is offset from the axis of the remaining portion of the hole. The axial hole includes a tapered section at its forward position which tapers inward from the recess. Following the tapered section is a midsection having grooves for receiving the externally threaded portion of the primary retention pin. Following the grooved midsection is a substantially cylindrical rearward section which has an opening for insertion of an alternate drive means for engaging the threaded portion of the primary retention pin to lock the primary retention pin within the axial hole of the cutter body.

The primary retention pin has a substantially cylindrical section having a notched top surface and a contact surface which presses against the wall of the tapered section of the axial hole in the cutter body when the primary retention pin is threaded into the axial hole. The contact surface is on the side of the primary retention pin remote from the shoulder of the cutting tool. This is due to the fact that the primary retention pin is positioned in the cutter body along the axis of the axial hole of the cutter body adjacent the base which is offset from the axis of the remaining portion of the axial hole. The primary retention pin also has a threaded midsection which engages the grooves of the axial hole of the cutter body to provide a locking fit.

The threads at the base of the primary retention pin are adapted to engage the alternate drive means such as a hex wrench which may be inserted into the opening of the rearward section of the cutter body. The alternate drive means is used to lock and unlock the primary retention pin within the axial hole of the cutter body. The primary retention pin may also be locked in place by employing turning means which engages the notched top surface to thereby drive the primary retention pin downward using a primary drive means such as a screwdriver.

The primary retention pin also has a cylindrical threaded axial hole therein running substantially the entire length of the primary retention pin for reversibly locking the secondary retention pin therein.

The cutting insert has at least one cutting edge and an axial hole therethrough for receiving the secondary retention pin. The axial hole of the cutting insert is defined by tapered walls extending inwardly from the top surface and bottom surface, respectively toward the midsection of the cutting insert to form a pair of mirror image V-shaped grooves in which rests the head of the secondary retention pin. As a result, when one cutting edge is no longer functional the cutting insert may be turned over and reinserted into the cutting tool to provide a new cutting edge.

The secondary retention pin comprises a tapered head section and a substantially cylindrical threaded body. The secondary retention pin is inserted through the axial hole of the cutting insert and is adapted for locking engagement within the axial hole of the primary retention pin by the interlocking relationship between the threads on the surface of the threaded body and the grooves in the axial hole of the primary retention pin. Of course, the position of the threads and grooves can be reversed (i.e., the threads being in the axial hole and the grooves on the surface of the secondary rention pin body) in keeping within the scope of the present invention.

As previously indicated, the primary retention pin is positioned within the axial hole of the cutter body along the axis of the axial hole adjacent the base which is offset from the axis of the remaining portion of the axial hole of the cutter body. On the other hand, the secondary retention pin is aligned with the axis of the remaining portion of the axial hole of the cutter body. As a result, when the secondary retention pin is inserted into locking engagement within the axial hole of the primary retention pin, the head of the secondary retention pin is forced against the tapered wall of the cutting insert nearest the shoulder of the cutter body. As a result, the tapered head section of the secondary retention pin exerts a force on the cutting insert in the direction of the supporting shoulder.

In one embodiment of the invention particularly adapted for lay-down type cutting inserts, the cutting tool also includes an insert seat positioned between the cutting insert and the cutter body. The insert-seat has an axial hole therethrough which is aligned with the axial holes of the cutting insert and the cutter body to provide a continuous pathway for receipt of the double pin retention assembly employed in the present invention. The axial hole of the insert seat includes an upper section which comprises an enlarged opening and a shoulder.

The primary retention pin used in this embodiment includes an upper flanged section which is driven against the shoulder of the insert seat when the primary retention pin is inserted into and secured within the axial holes described above. As the primary retention pin is driven into the cutter body, the flange is forced downward against the shoulder of the insert seat to thereby lock the insert seat against the cutter body.

The secondary retention pin in accordance with the present invention provides a locking force along substantially the entire length of the primary retention pin including the midsection thereof which has been lacking in prior art devices. This is achieved by the locking engagement created by providing the secondary retention pin with threads substantially along its length which engage corresponding grooves within the axial hole of the primary retention pin.

In operation, the primary retention pin is inserted into the hole of the cutter body. The primary retention pin is locked within the cutter body by driving the head of the primary retention pin with the primary drive means and/or employing the secondary drive means through the rearward opening of the cutter body so that the threads of the primary retention pin engage the grooves within the axial hole of the cutter body.

After the primary retention pin is locked in place, the cutting insert is placed in the recess so that the axial hole therein is aligned with the axial hole in the cutter body. The secondary retention pin is then inserted through the axial hole of the cutting insert and then driven into the axial hole within the primary retention pin. Because of the offset between the axis of the primary retention pin and the secondary retention pin, the head of the secondary retention pin is pressed against the tapered wall of the cutting insert in the direction of the shoulder of the cutting tool. As a result, the cutting insert is securely locked in place and is substantially free of movement during machining operations.

In lay-down type tool holders, the same procedure is followed except that the insert seat is inserted in the recess and the cutting insert is then placed on the top of the insert seat.

To remove the cutting insert the foregoing procedures are followed in reverse order. Specifically, the secondary retention pin is removed and the cutting insert is turned over to employ a new cutting edge or discarded. The primary retention pin may be removed or left in the cutter body as desired when indexing an insert.

## BRIEF DESCRIPTION OF THE DRAWINGS

The following is a detailed description together with accompanying drawings of illustrative embodiments of the invention. It is to be understood that the invention is capable of modification and variation apparent to those skilled in the art within the spirit and scope of the invention.

FIGURE 1 is a perspective view of an on-edge type cutting in accordance with the present invention;

FIGURE 2 is an expanded cross-sectional view taken along line 2-2 of FIGURE 1 showing the cutting insert locked in place using the double pin retention assembly of the present invention;

FIGURE 3 is an enlarged, exploded view of the primary and secondary retention pins shown in FIGURE 2;

FIGURE 4 is a perspective view of one embodiment of the invention showing a lay-down type cutting tool with the cutting insert locked in place; and

FIGURE 5 is an expanded cross-sectional view taken along line 5-5 of FIGURE 4 showing the cutting insert locked in place on an insert seat using the double pin retention assembly of the present invention.

## DETAILED DESCRIPTION OF THE DRAWINGS

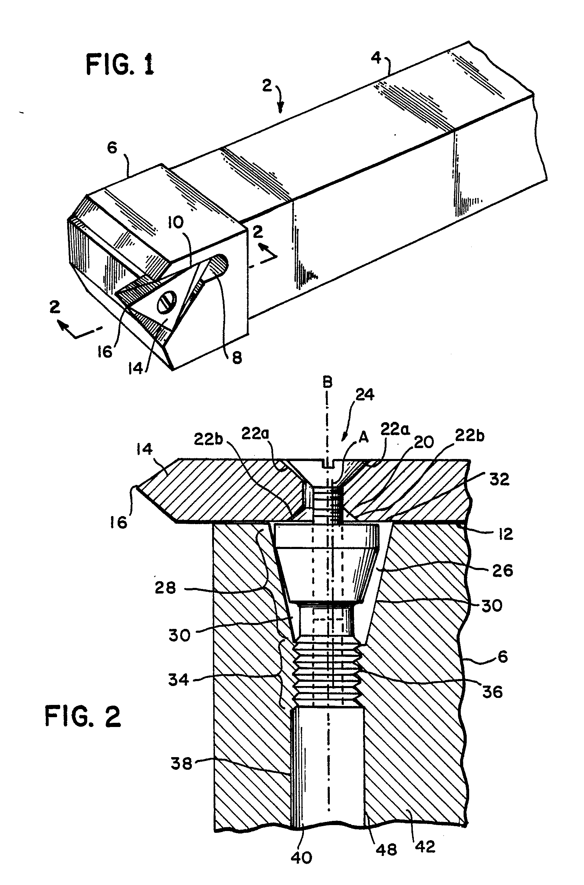

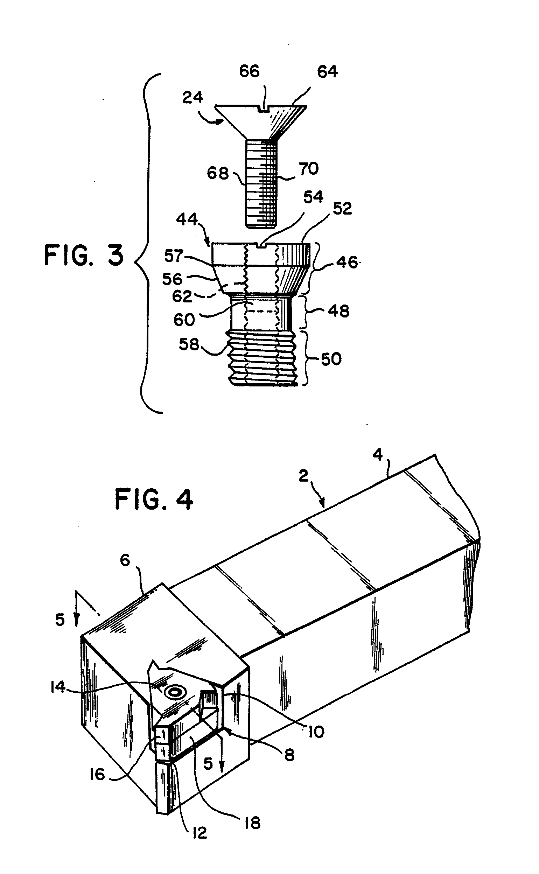

Referring to the drawings and specifically to FIGURES 1 and 4, a cutting tool 2 generally includes a handle 4 which is inserted into a suitable cutting machine (not shown). At the upper end of the handle 4 is a cutter body 6 having therein a recess 8 formed by a shoulder 10 and a base 12 (see FIGURE 2) to provide a nesting place for a cutting insert 14 having a cutting edge 16. The cutting insert 14 may have a triangular shape as shown in FIGURE 1 or any other suitable shape customarily used in machining operations.

The cutting tool 2 shown in FIGURE 1 is an on-edge type cutting tool wherein the cutting insert 14 rests on its end. Another embodiment is shown in FIGURE 4 which is a lay-down type cutting tool. In this embodiment an insert seat 18 is positioned between the cutting insert 14 and the base 12 of the cutter body 6 as described in detail hereinafter.

Referring to FIGURE 2, the cutting insert 14 has an axial hole 20 formed by pairs of inwardly tapered walls 22a and 22b forming a pair of mirror imaged V-shaped grooves for receiving a secondary retention pin 24 on the top or bottom side of the cutting insert. The pairs of tapered walls 22a and 22b serve as a seat for the secondary retention pin 24 and allow the cutting insert 14 to be inverted to provide a new cutting edge 16.

The cutter body 6 includes an axial hole 26 having an inwardly tapered upper section 28 formed by tapered walls 30 having a top open end 32 which is aligned with the axial hole 20 in the cutting insert 14 to provide a pathway for the insertion of the secondary retention pin 24 into a primary retention pin as hereinafter described.

The axial hole 26 also includes a mid-section 34 having grooves 36 for engaging corresponding threads of the primary retention pin. The axial hole 26 also has a substantially cylindrical rearward section 38 running from the bottom of the grooved midsection 34 to an opening 40 at the end 48 of the cutter body 6 remote from the top end 32.

The portion of the axial hole 26 adjacent the base 12 of the recess 8 has a central axis defined by the line A-A. The remaining threaded portion of the axial hole 26 (i.e., mid-section 34) has a central axis B-B offset from the axis A-A.

As shown in FIGURE 3, a primary retention pin 44 for use in on-edge cutting tools includes an upper section 46, a midsection 48 and an externally threaded lower section 50. The upper section 46 includes a substantially cylindrical head 52 having a notch 54 which is engaged by a drive means (not shown) such as a screwdriver when the primary retention pin 44 is driven into the axial hole 26 of the cutter body 6.

The upper section 46 also comprises a tapered wall 56 which meets the cylindrical head 52 at a surface 57. The surface 57 presses against the tapered wall 30 of the axial hole 26 when the primary retention pin 44 is driven into the cutter body 6 as described hereinafter.

The lower section 50 of the primary retention pin 44 has a series of threads 58 which engage the corresponding grooves 36 in the midsection 34 of the axial hole 26 thereby securely anchoring the lower section 50 of the primary retention pin 44 in the axial hole 26 of the cutter body 6.

Running centrally through the length of the primary retention pin 44 is an axial hole 60 having grooves 62 on the surface thereof for engaging corresponding threads of the secondary retention pin 24 when the secondary retention pin 24 is driven into the primary retention pin 44. As a result, the cutting insert 14 is locked into place in the recess 8 of the cutter body 6.

As shown in FIGURE 3, the secondary retention pin 24 includes a tapered head 64 having a notch 66 which is engageable by a suitable drive means such as a screwdriver to drive the secondary retention pin 24 into locking engagement within the axial hole 60 of the primary retention pin 44. The tapered head 64 rests within the V-shaped groove formed by the tapered walls 22a or 22b of the cutting insert 14 and presses against the tapered wall 22a when the secondary retention pin 24 is driven into the primary retention pin. This is because of the offset arrangement between the primary retention pin 44 and the secondary retention pin 24. As a result, the head 64 forces the cutting insert 14 against the base 12 of the cutter body 6 in the direction of the shoulder 10 to provide a secure fit for the cutting insert 14.

The secondary retention pin 24 also has a substantially cylindrical body 68 having external threads 70 thereon which mate with the grooves 62 on the surface of the axial hole 60 within the primary retention pin 44. When the secondary retention pin 24 is driven into the axial hole 60 of the primary retention pin 44, the threads 70 engage the grooves 62 to provide a secure lock along the midsection 48 of the primary retention pin 44. This provides a downward force along the length of the primary retention pin 44 which prevents side to side movement when the cutting insert 14 is used in machining operations.

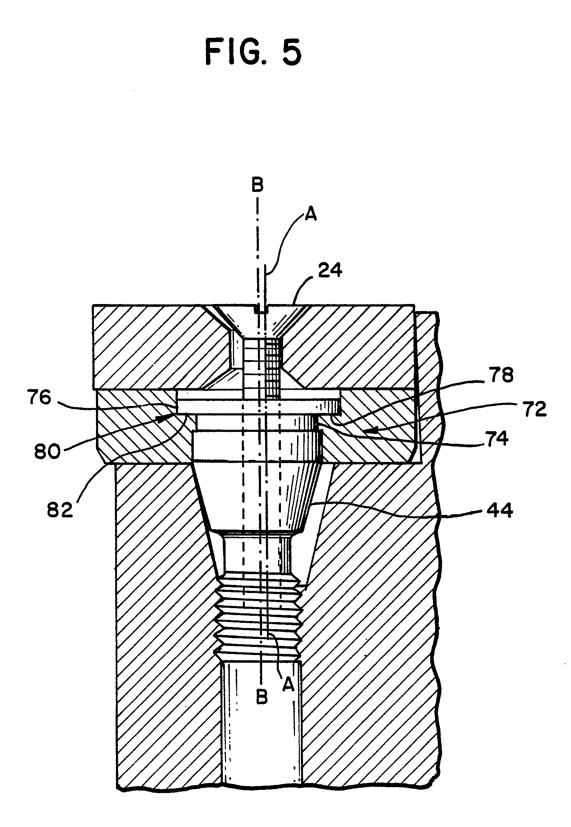

In the lay-down type tool holders of the present invention as shown in FIGURES 4 and 5, the primary retention pin 44 also includes insert seat engaging section 72 comprising a base 74 and an outwardly extending flange 76 having a lower surface 78.

As previously indicated, the lay-down type tool holder also includes an insert seat 18 having an axial hole in the central portion thereof and a recess 80 defined in part by a shoulder 82.

The offset of axis A-A from axis B-B as described above in FIGURE 2 in connection with the on-edge cutting tool is also employed for the lay-down cutting tool shown in FIGURE 5.

When the secondary rention pin 24 is driven into the axial hole 60 of the primary retention pin 44, the lower surface 78 of the flange 76 exerts pressure on the shoulder 82 of the recess 80 thereby forcing the cutting insert 14 downward in pressing engagement with the insert seat 18.

In operation of the on-edge cutting tool, the cutting insert 14 is locked in place ready for use by first inserting and driving the primary retention pin 44 into the axial hole 26 of the cutter body 6 and rotating the same by inserting a drive means in notch 54 and turning until the threads 58 of the primary retention pin 44 fully engage the grooves 36 in the axial hole 26. Further tightening may be achieved by inserting a hex wrench into the opening 40 until the hex wrench engages the threads 58. The hex wrench is then rotated in a manner so that the threads are forced downward until all the threads 58 are engaged by the grooves 36.

The cutting insert 14 is then placed on the base 12 with its axial hole 20 aligned with the axial hole 26 of the cutter body 6. The secondary retention pin 24 is then inserted through the axial hole 20 of the cutting insert 14 and rotated by a drive means inserted into the notch 66 until the threads 70 engage the grooves 62 of the axial hole 60 of the primary retention pin 44.

In operation for the lay-down tool holder, the primary retention pin 44 is driven into the axial hole 26 of the cutter body 6, the flange 76 is forced downward and therby applies a downward force against the shoulder 72 of the insert seat 18 thereby locking the insert seat 18 within the recess 8 of the cutting tool 2. Then the secondary retention pin 24 is inserted through the cutting insert 14 and driven into the axial hole 60 of the primary retention pin 44 to apply a downward force so that the cutting insert 14 is secured against the insert seat 18.

The head section 64 of the secondary retention pin 24 presses against the the tapered wall 22a of the cutting insert 14 closest to the shoulder 10 of the cutting tool. This is because the secondary retention pin 24 enters the primary retention pin 44 at a slight angle owing to the displacement of the primary retention pin 44 within the axial hole 26 of the cutter body 6 whereby the primary retention pin 44 is offset with respect to the secondary retention pin 24.

Disengagement of the cutting insert 16 may be accomplished by reversing the procedure. Additionally, the primary retention pin 44 may be disengaged by employing a drive means such as a hex wrench to unlock the primary retention pin 44 by inserting the same through the opening 40 of the cutter body 6 until it engages the threads 58 of the lower section 50 of the primary retention pin 44.

## Claims

1. A cutting tool comprising:

   (a) a cutting insert having a first axial hole;

   (b) a cutter body having a recess at one end comprising a base and at least one shoulder for supporting the cutting insert and having a second axial hole extending from the recess to the opposed end of the cutter body, said second axial hole being alignable with the first axial hole, wherein the axis of the portion of the second axial hole adjacent the base of the recess is offset from the axis of the remainder of the first axial hole in the direction toward the shoulder of the recess, said second axial hole including means for reversibly locking a primary retention pin therein;

   (c) a primary retention pin adapted to be inserted into the second axial hole and comprising means for reversibly locking the primary retention pin in the second axial hole of the cutter body and a third axial hole comprising means for reversibly locking a secondary retention pin therein.

   (d) a secondary retention pin adapted to be inserted through the first axial hole of the cutting insert and into the third axial hole of the primary retention pin and comprising means for exerting pressure against the cutting insert in the direction of the shoulder of the recess when said secondary retention pin is in reversed locking engagement within the third axial hole and means in conjunction with the third axial hole for reversibly locking the secondary retention pin therein.

2. The cutting tool of Claim 1, wherein the means for reversibly locking the secondary retention pin within the third axial hole of the primary retention pin comprises a plurality of grooves on the surface of the third axial hole and a plurality of groove engageable threads on the surface of secondary retention pin whereby the threads engage said grooves in reversable locking engagement when the secondary retention pin is driven into the third axial hole.

3. The cutting tool of Claim 2, wherein the first axial hole comprises at least one V-shaped groove and the secondary retention pin comprises a tapered head section and a substantially cylindrical body having threads thereon for reversible locking engagement with the grooves on the surface of the third axial hole, said tapered head section being in pressure contact with the portion wall of the V-shaped grooved of the cutting insert closest to the shoulder of the recess when the secondary retention pin is in locking engagement within the third axial hole.

4. The cutting tool of Claim 1, wherein the secondary retention pin further comprises a substantially cylindrical body having threads on at least a portion of the exterior surface thereof and the third axial hole having a shape complimentary to the shape of the cylindrical body of the secondary retention pin wherein the threads of the secondary retention pin are adapted to be in locking engagement with the grooves in the third axial hole when the secondary retention pin is driven into the third axial hole.

5. The cutting tool of Claim 1, wherein the primary retention pin comprises a substantially cylindrical head and a tapered wall forming a contact surface therebetween and a threaded lower section and the second axial hole having an inwardly tapered upper section and a grooved lower section, wherein when the primary retention pin is driven into the second axial hole, the contact surface of the primary retention pin presses against the portion of the inwardly tapered upper section of the second axial hole remote from the shoulder of the recess and the threads of the primary retention pin engage the grooved lower section of the second axial hole to thereby lock the primary retention pin within the second axial hole.

6. The cutting tool of Claim 5 wherein the threaded lower section of the primary retention pin comprises means for receiving a drive means, the second axial hole having a bottom end for receiving the drive means, wherein the drive means is inserted into the bottom end of the second axial hole to engage the grooved lower section of the second axial hole and thereby secure the primary retention pin within the second axial hole.

7. The cutting tool of Claim 1 wherein the cutting tool is a lay-down type cutting tool further comprising an insert seat having an axial hole therein and positioned between the cutting insert and the recess of the cutter body, the insert seat comprising a recess comprised of a base and a shoulder, the primary retention pin further comprising means for applying pressure against the recess of the insert seat when the primary retention pin is driven into the third axial hole of the cutter body.

8. The cutting tool of Claim 7 wherein the primary retention pin comprises a flange which has a lower recess which is adapted to exert pressure on the base of the recess of the cutting insert when the primary retention pin is driven into the second axial hole.

# FIG. 1

# FIG. 2

0 269 918

FIG. 3

FIG. 4

# FIG. 5